# EUROPEAN PATENT APPLICATION

(11) **EP 1 702 994 A1**
(43) Date of publication of application: **20.09.2006**
(21) Application number: 04807357.1
(22) Date of filing: 20.12.2004
(51) Int. Cl.: C22B 1/248, B30B 9/28, B09B 3/00

(54) **STEEL MANUFACTURING DUST SOLIDIFIED, PROCESS FOR PRODUCING THE SAME AND PRODUCTION APPARATUS THEREFOR**

(30) Priority: 25.12.2003 JP 2003429921
(71) Applicant: NTN CORPORATION, Osaka-shi, Osaka 550-0003 (JP); Unitop Corporation, 5500003 (JP)
(72) Inventor: SADA, Kouichi UNITOP CORPORATION, Osaka-shi, Osaka 5500003 (JP)
(74) Representative: Gassner, Wolfgang
(86) International application number: PCT/JP2004/019000
(87) International publication number: WO 2005/064024

(57) **Abstract**

This process for producing a steel manufacturing dust solidified includes placing dust (10) containing steel as a main component that occurs in a steel manufacturing process in cylindrical mold (8) and applying pressure to thereby obtain solidified dust (B). This steel manufacturing dust solidified (B) is in the form of a briquette, which has, for example, a columnar form whose cross section configuration is circular. The dimension thereof is, for example, 50 to 100 mm in diameter and 30 to 80 mm in height. The steel manufacturing dust (10) may have carbon, aluminum, etc. occurring in the steel manufacturing process mixed thereinto as a binder. The production apparatus therefor includes the mold (8), lid member (9) closing one side thereof and plunger (11) that is inserted in the mold (8).

## Description

### FIELD OF THE INVENTION

The present invention relates to a steel manufacturing dust solidified, a manufacturing process and a manufacturing apparatus therefor, for enabling dust, occurring during an iron and steel manufacturing process with a melting furnace or the like, to be reused as a steel manufacturing raw material.

### BACKGROUND ART

During the iron and steel manufacturing process, dry dust, which occurs as a result of coagulation of generated vapors, is generated in, for example, a melting furnace and is recovered by a dust collector. Since this dust contain iron as a principal component, the reuse thereof is desirable. However, since the iron and steel dust, when charged into the melting furnace in the form as it stands, tends to be scattered afloat and is again recovered by the dust collector, the reuse thereof is difficult. For this reason, it has hitherto been disposed by filling up in land, but the amount of generation of the iron and steel dust in Japan reaches hundreds of thousand ton per year so long as an electric furnace dust is concerned and disposal by filling up in land is undesirable in terms of degradation of the environment of the land to be filled up and the effective utilization of resources.

In view of this, various methods of reuse have been attempted. By way of example, a method of pelletizing to a diameter of about 5 to 30 mm (See, for example, the Japanese Laid-open Patent Publication No. 11-152511.), a method of filling in a container and then throwing into a furnace (See., for example, the Japanese Laid-open Patent Publication No. 2000-15526.), a method of briquetting by addition of an organic binder (See, for example, the Japanese Laid-open Patent Publication No. 2003-247026.) and others have been suggested.

It is to be noted that with respect to the reuse of a grinding sludge, a method has been suggested to pressing and forming within a mold after having been concentrated to form a briquette (See, for example, the Japanese Laid-open Patent Publication No. 2003-181690.).

The above described pelletizing method is such that since pellets formed are in the form of particulates of a diameter within the range of about 5 to 30 mm, a process of transporting the formed pellets into the furnace is not still efficient. The method of filling into the container and then throwing into the furnace is costly since there is need to prepare containers that are thrown together with the dust. The above described briquetting method has an excellent handleability as compared with the pellet if briquetted to a certain size although the size of briquettes is not specifically described. However, it has hitherto been considered impossible to briquette the iron and steel dust in the form as it stand, to a strength enough to allow them to be transported and an organic binder and others are mixed to secure the strength as in the above mentioned Japanese Laid-open Patent Publication No. 2003-247026. For this reason, not only does it contain the organic binder which is unnecessary in steel manufacture, but the addition thereof render it to be costly.

### DISCLOSURE OF THE INVENTION

An object of the present invention is to provide a steel manufacturing dust solidified, with which dust occurring during an iron and steel manufacturing process can be rendered to have an excellent handleability for reuse thereof, which does not contain excessive additives and which can be manufactured at a low cost, a manufacturing method thereof and a manufacturing apparatus therefor.

The steel manufacturing dust solidified of the present invention is a solid product formed by pressing and forming (pressure forming) a dust containing, as a principal component, iron occurring during an iron and steel manufacturing process. The pressing and forming is carried out by the use of, for example, a mold (forming die). The solid product referred to herein is in the form of a briquette, which is big as compared with the pellet that is a granulated body. Although this steel manufacturing dust solidified is desirably what only the dust occurring during the iron and steel manufacturing process (hereinafter referred to as "iron and steel dust") is pressed and formed, it may be the dust mixed with a binder in the form of a powder of a material capable of becoming a component of the steel material, for example, mixed with a powder of carbon, aluminum or the like, that has occurred during the iron and steel manufacturing process, as a binder. The carbon contributes to increase of the thermal efficiency.

Since the steel manufacturing dust solidified of the structure described above is a big solid product as compared with what has hitherto been granulated into a pellet, after solidification, the handleability is excellent until it is charged into a furnace. Also, since it is the iron and steel dust pressed and formed and does not contain excessive additives, iron and steel manufactured by reuse can have a high quality and no gas or the like resulting from the additives will be generated. Although in the past solidification to a bigger size than the pellet in the form as it stands has been considered impossible, according to tests and a test model of the steel manufacturing dust solidified manufacturing apparatus, by properly setting pressing conditions or the like, it was possible to manufacture what has a strength generally to avoid breakage in handling even though it is a steel manufacturing dust solidified in the form of a briquette of a size greater than the pellet. If it is only the iron and steel dust pressed and formed with no binder contained therein, preparation and addition of the binder are unnecessary and, therefore, a low cost manufacture is possible. It is to be noted that if required, the binder in the form of a powder of a material capable of becoming a component of the steel material as hereinabove described, for example, a powder of carbon, aluminum or the like occurring during the iron and steel manufacturing process may be mixed in the dust as a binder for increasing the strength. With a small amount of carbon, aluminum or the like, it does not affect on reduction of the material quality of the steel material and, with the carbon, aluminum or the like occurring during the iron and steel manufacturing process, it can be available from the same steel manufacturing facility and influence on increase of the cost is minimal.

The steel manufacturing dust solidified of the present invention is preferably a columnar body having a round cross-sectional shape. If so, solidification is easy by inserting into a mold and pressing and forming and, even when it becomes a big one to a certain extent, manufacture of what has a strength sufficient to avoid cracking and breakage which it is dropped during handling is possible.

The steel manufacturing dust solidified, which is in the form of the columnar body of a round cross-sectional shape is preferably 50 to 100 mm in diameter and 30 to 80 mm in height.

What is smaller than 50 mm in diameter and what is smaller than 30 mm in height are too small and the handleablity is bad and the productivity is retarded for making on one-by-one basis. What is greater than 100 mm in diameter and what is greater than 80 mm in height are difficult to solidify only with the steel manufacturing dust and impossible to solidify and, even though solidification is possible, the strength is short of requirement and the handleability is poor. It is to be noted that the difficulty of solidification is applicable where the mold in the form of a cylinder chamber is employed.

The ratio of the height relative to the diameter is preferably within the range of 0.7 to 0.8.

A process of manufacturing a steel manufacturing dust solidified of the present invention is a method, in which a dust containing as a principal component iron occurring during an iron and steel manufacturing process is charged into and pressed within a mold to provide a solid product.

According to this process, since the iron and steel dust is supplied into and pressed within the mold, pressing can be easily accomplished with a high pressure and, even with the iron and steel dust, solidification to a size bigger than the pellet can be accomplished easily. For this reason, the steel manufacturing dust solidified of the structure of the present can be easily manufactured.

In the manufacturing method of the present invention, the mold is preferably in the form of a cylindrical chamber. When in the form of the cylindrical chamber, pressing with a high pressure can be accomplished easily. Also, if it is in the form of a vertically oriented cylindrical chamber, the steel manufacturing dust can be charged from above and the steel manufacturing dust solidified can be discharged from below and charging of the steel manufacturing dust and discharge of the steel manufacturing dust solidified are easy.

In the manufacturing method of the present invention, a powder of carbon, aluminum or the like generated during the iron and steel manufacturing process may be mixed in the dust as a binder and is then charged into the mold. With respect to the carbon, aluminum and the like, any one of them or both of them may be mixed.

Depending on the composition kind, proportion and characteristic of the steel manufacturing dust, mixing of the powder of carbon or aluminum or the like as a binder can facilitate solidification of the steel making dust solidified and what has a high strength can be made. If the binder is carbon or aluminum or the like, no adverse influence will result in as material quality of the steel material that is manufactured as a result of the reuse. The iron and steel manufacturing process to obtain the steel manufacturing dust and the iron and steel manufacturing process to produce carbon or aluminum or the like may be a process taking place within the same furnace or a process taking place within a different furnace, but what is produced within the same steel manufacturing facility is desirable. By way of example, when the steel manufacturing dust produced within a melting furnace such as, for example, an electric furnace is to be solidified, carbon or aluminum or the like produced in a blast furnace may be used.

The manufacturing apparatus of the present invention is a manufacturing apparatus for a steel manufacturing dust solidified, which is operable to press and form a dust containing as a principal component iron occurring during an iron and steel manufacturing process to provide a solid product, which apparatus comprises a mold in the form of a cylindrical chamber, a lid member for closing one end of this mold, and a plunger capable of advancing from the opposite end into the mold to press the dust within the mold. The mold referred to above may be either vertically oriented or horizontally oriented, but in the case of the vertically oriented design, that end where the lid member is provided is preferably located on a lower side.

If it is of a type provided with the mold in the form of the cylindrical chamber, the lid member and the plunger, even with only the iron and steel dust, molding can be accomplished easily by pressing with a high pressure and charging of the iron and steel dust and discharge of the steel manufacturing dust solidified are easy to achieve. Where the mold is of a vertically oriented type and the lid member is positioned on a lower side, charging of the iron and steel dust and discharge of the steel manufacturing dust solidified can be facilitated.

The steel manufacturing dust solidified, the manufacturing method thereof and the manufacturing therefor of the present invention are for providing a solid product by pressing and forming the dust, containing iron as a principal component and produced during the iron and steel manufacturing process and, therefore, the dust produced during the iron and steel manufacturing process can be rendered to be excellent in handleability for reuse and can be manufactured at a low cost with no excessive additive contained therein.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1(A) is a schematic diagram showing a steel manufacturing dust solidified production apparatus according to a first preferred embodiment of the present invention;
Fig. 1(B) is a longitudinal sectional view showing a solidifying mechanism portion of the same apparatus;
Figs. 2(A), 2(B), 2(C) and 2(D) are explanatory diagrams used to explain the operation of the solidifying mechanism portion shown in Fig. 1(B);
Fig. 3(A) is a perspective view showing an example of steel manufacturing dust solidified manufactured by the same apparatus; and
Fig. 3(B) is a perspective view showing another example of steel manufacturing dust solidified manufactured by the same apparatus.

### BEST MODE FOR CARRYING OUT THE INVENTION

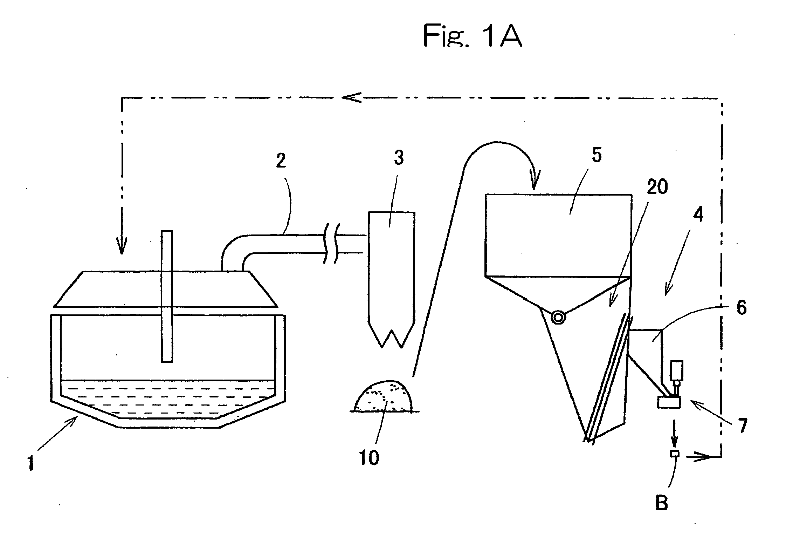

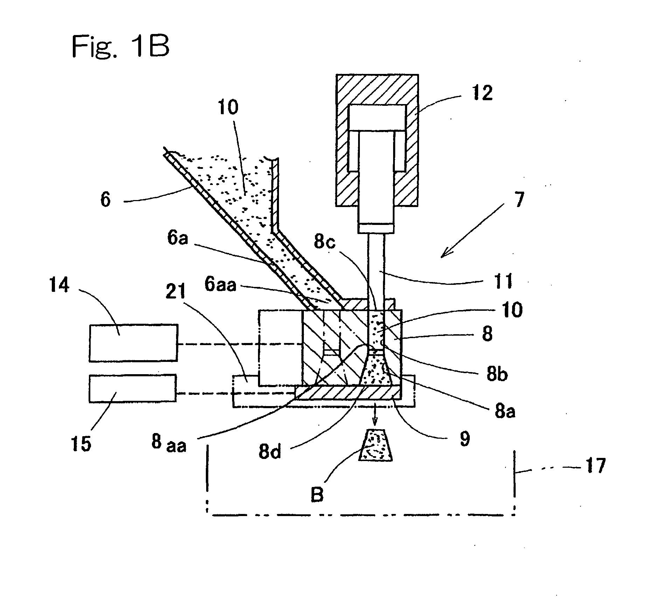

A first preferred embodiment of the present invention will be described with reference to Figs. 1 to 3. Referring first to Figs. 1(A) and 1(B), dust occurring in a melting furnace 1 is introduced from an exhaust duct 2 into a dust collector 3 together with exhaust gases, from which the dust contained in the exhaust gases collected by the dust collector 3 is discharged in the form of fine particles. This dust 10 contains iron as a principal component thereof. The dust discharged from the dust collector 3 is supplied through a transport means (not shown) into a hopper 5 in a steel manufacturing dust solidified manufacturing apparatus 4. During the transportation with the above described transport means, a suitable pretreatment, for example, a treatment of dewatering or pelletizing or the like, of the dust may be carried out. The dust within the hopper 5 is supplied through a supply mechanism 6 into a solidifying mechanism portion 7 of the steel manufacturing dust solidified manufacturing apparatus 4.

The solidifying mechanism portion 7 includes, as shown in a lower portion of Fig. 1(B) on an enlarged scale, a mold 8 in the form of a vertically oriented cylinder chamber, a lid member 9 for closing a lower surface outlet 8d of this mold 8, and an elevatable plunger 11 that can be inserted from above into the mold 8 to press the dust 10 within the mold 8. Selective advance and retraction of the plunger 11 and an application of a pressing force from the plunger 11 are carried out by a pressure device 12. The pressure device 12 is employed in the form of, for example, a hydraulic cylinder. Other than the hydraulic cylinder, the pressure device 12 may be employed in the form of a rotary-linear motion translating mechanism such as, for example, a motor and a ball screw or the like for translating a rotation of the motor into a linear movement (both not shown).

The mold 8 has a bottom portion thereof rendered to be a mold surface forming portion 8a for forming an outer peripheral shape of a manufacturing dust solidified B and a top portion rendered to be a metering chamber 8b having an inner wall surface represented by a cylindrically shaped surface. The metering chamber 8b has such a capacity that the amount of dust, at which the dust 10 fills up from the metering chamber 8b to the mold surface forming portion 8a, can be a target amount. The mold surface forming portion 8a is rendered to be a shape capable of molding the steel manufacturing dust solidified B so as to represent a columnar body having a cross-sectional shape which is round. The mold surface forming portion 8a has an inner surface, which is, for example, truncated conical or cylindrical surface.

The mold 8 is supported by a guide member (not shown) for selective advance and retraction in a horizontal direction and a upper surface inlet 8c is movable between an elevated position of the plunger 11 and a position at which it is aligned with an outlet 6aa of a supply duct 6a of a supply mechanism 6. Selective advance and retraction of the mold 8 is carried out by a mold advancing and retracting device 14 such as, for example, a hydraulic cylinder. The lid member 9 for closing the lower surface outlet 8d is provided for selective advance and retraction along a lower surface of the mold 8 and can be selectively opened and closed by a lid opening and closing device 15 between positions, at which the lower surface outlet 8d of the mold 8 is closed and opened, respectively.

A manufacturing process utilizing the steel manufacturing dust solidified manufacturing apparatus of the structure described above will now be described. The dust 10, which has occurred in the melting furnace 1 and subsequently discharged in the form of fine particles from the dust collector 3, is supplied into the hopper 5 and then supplied from the hopper 5 into the solidifying mechanism portion 7. This particulate dust 10 contains iron as a principal component and a small quantity of other metallic elements. The steel manufacturing dust solidified B, which has been solidified by the solidifying mechanism portion 7 is collected in a recovery container 17 of a box shape, a cage shape or the like shape and, is then charged into the melting furnace 1 together with other raw material at the time of charging of materials into the melting furnace 1, and is thus reused as a steel manufacturing material. The raw material charged into the melting furnace 1 includes a principal raw material, which is hot metal obtained from a blast furnace, and in addition thereto, iron scraps, calcined lime and the like are used as an auxiliary raw material.

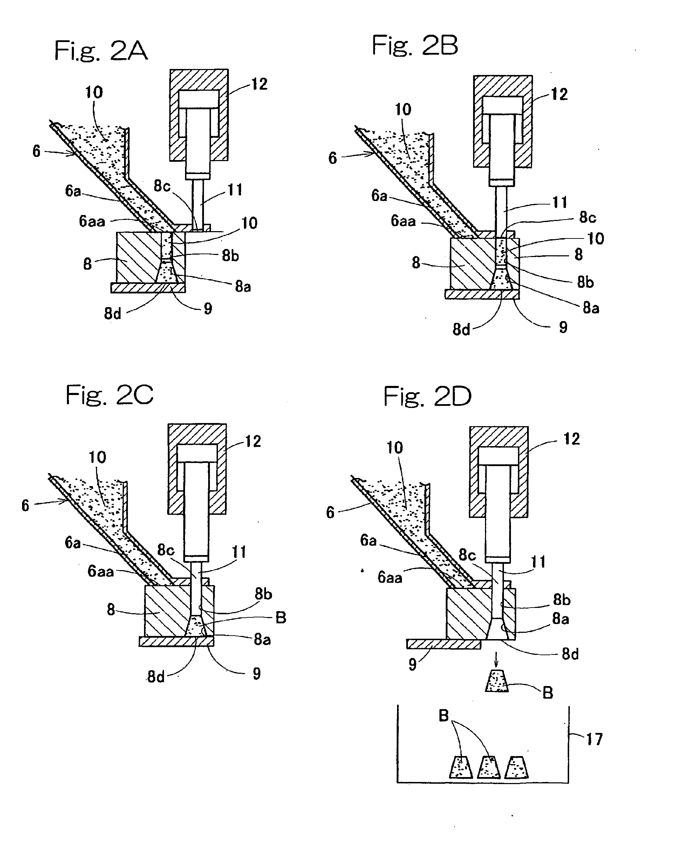

Figs. 2(A) and 2(B) explain the operation of the solidifying mechanism portion 7. As shown in Fig. 2(A), when the mold 8 is held at the position, where the upper surface inlet 8c of the mold 8 is aligned with the outlet 6aa of the supply duct 8a of the supply mechanism 6, by the effect of a free fall or a forced charging from the supply duct 6a, the dust 10 enters into the interior of the mold 8. The flow of the dust 10 into the mold 8 stops when it fills up to the mold surface forming portion 8a and to the metering quality 8b inside the mold 8. In a condition in which a predetermined amount of the dust 10 is thus supplied, the mold 8 slides (Fig. 2(B)) to the position where the upper surface inlet 8c thereof is aligned with the elevated position of the plunger 11. In this condition, the plunger 11 advances into the mold 8 to press the dust within the mold 8. The plunger 11 advances to an upper end of the mold surface forming portion 8a within the mold 8 and, in this condition, a predetermined pressure acts on the dust 10 within the mold surface forming portion 8a, with the dust 10 within the mold consequently pressed and formed into the steel manufacturing dust solidified B of an outer peripheral shape conforming to the shape of an inner surface of the mold surface forming portion 8a.

The steel manufacturing dust solidified B so molded is ejected from the mold 8 when the lid member 9 is opened or when it is pressed down by the plunger 11 after the lid member 9 has been opened. The steel manufacturing dust solidified B so ejected falls downwardly into and is therefore collected within the recovery container 17. When a predetermined mount of the steel manufacturing dust solidified B accumulates within the recovery container 17, the recovery container 17 is replaced with an empty one. The recovery container 17 containing the steel manufacturing dust solidified B is transported to the melting furnace 1 and a wait is made for the time of charging of the raw material to come.

According to this steel material dust solidified manufacturing process, since the iron and steel dust 10 is charged into the mold 8 and pressed, pressing can be accomplished easily with a high pressure and, even only with the iron and steel dust 10, it can be solidified into a briquette shape that is bigger than the conventional pellet. Also, since something in the form of a cylindrical chamber is employed as the mold 8, the pressing can easily be carried out with a further high pressure. Also, since the mold 8 is of an upright design, the dust 10 can be charged from above and discharged from below as the steel manufacturing dust solidified B and, therefore, charging of the dust 10 and discharge of the steel manufacturing dust solidified B can be accomplished easily.

The steel manufacturing dust solidified B so manufactured is a solid product in the form of a briquette that is bigger than the conventional pellet of this kind and, therefore, after solidification, the handleability until it is charged into the furnace is excellent. Also, since the it is the iron and steel dust 10, which has been pressed and formed, and contain no excessive additives, the iron and steel, which are manufactured as a result of reuse thereof, can have a high quality and no gases or the like resulting from the additives will be generated. Since the steel manufacturing dust solidified B contains no binder and is the one formed by pressing and forming only the iron and steel dust, no process of preparing and adding a binder is necessary and it can be manufactured at a low cost.

It is to be noted that if required, powder such as carbon, aluminum or the like may be mixed in the dust as a binder for increasing the strength. The carbon, aluminum or the like is preferably that occurring in the same steel manufacturing facility as a byproduct or residual during an iron and steel manufacturing process, for example, during a process of making hot metal with a blast furnace, or any other process. If a small amount of carbon, aluminum or the like is used, it does not affect on reduction of the quality of the steel material and, rather, it may be often feasible as the quality of the steel material. Also, if it is a powder of carbon, aluminum or the like that is occurred during the iron and steel manufacturing process, it can be available from within the same steel manufacturing facility and, therefore, influence on increase of the cost is minimal.

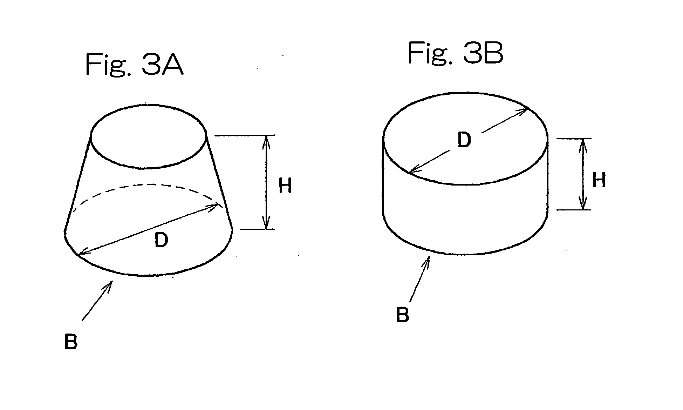

Since this steel manufacturing dust solidified B is in the form of the columnar body having a round cross-sectional shape, solidification through pressing and forming by supplying into the mold 8 is easy. The steel manufacturing dust solidified B in the form of the columnar body having a round cross-sectional shape preferably has a diameter D (Figs. 3(A) and 3(B)) within the range of 50 to 100 mm and a height within the range of 30 to 80 mm. Where the steel manufacturing dust solidified B is not in the form of a cylindrical body and is in the form of, for example, a truncated conical shape as shown in Fig. 3(A), the diameter D referred to above may be a diameter of a portion thereof which represents a maximum diameter.

That having a diameter smaller than 50 mm and that having a height smaller than 30 mm are bad in handleability and the productivity is retarded for making on one-by-one basis. That having a diameter greater than 100 mm and that having a height greater than 80 mm are, even though solidified, difficult to secure a strength enough to avoid breakage resulting from fall by its own weight and also bad in handleability. It is to be noted that difficulty of solidification referred herein is applicable where the mold in the form of the cylindrical chamber is employed.

The ratio of the height relative to the diameter is preferably within the range of 70 to 80% in terms of difficulty in solidification.

Experiments will be described by way of example. For the experiments, the steel making dust solidified manufacturing apparatus including the mold in the form of a horizontally laid cylinder chamber, the lid member closing one end thereof and the plunger capable of advancing from the other end into the mold to press the iron and steel dust therewithin was employed. The steel manufacturing dust solidified was of a diameter of about 71 mm and a height within the range of about 32 to about 60 mm.

For the steel manufacturing dust, the dusts a and b of the following compositions were employed. Where addition is made as a binder, a carbon type powder d of the following composition was employed, The composition of each of the dusts are values detected from X-ray spectrums.
(1) Detected Elements (%) of Steel Manufacturing Dust a:
   Fe: 53.91, Zn: 25.33, C:1.27, Mg:2.12, Si: 2.43, C1: 7.99,
   K:1.27, Ca: 2.01, Mn:3.67
(2) Detected Elements (%) of Steel Manufacturing Dust b:
   Fe:73.14, Mg:2.54, Al:1.49, Si:2.65, Ca:18.06, Mn:2.12
(3) Detected Elements (%) of Carbon Type Powder d:
   C: 92.22, Na: 0.35, Mg: 0.94, Si: 1.78, Cl: 3.19, Ca: 1.53

Example 1: The steel manufacturing dust a and the carbon type powder d were mixed in a mixing ratio of 4:1 and pressured and molded within the previously described mold. The size of the steel manufacturing dust solidified was 71 mm in diameter, 58.5 mm in height and 696 grams in weight. In this example, a relatively quickly solidification was achieved.
Example 2: Only the steel manufacturing dust was pressed and formed within the previously described mold after having been dewatered to a water content of 6 to 7% as a pretreatment. The size of the steel manufacturing dust solidified was 71 mm in diameter, 32 mm in height and 602 grams in weight. Even in this example, solidification was possible, but it was somewhat fragile.

It is to be noted that although in the foregoing embodiment the dust occurring in the exhaust gases within the melting furnace 1 in the form of an electric furnace was used to manufacture the steel manufacturing dust solidified B, the steel manufacturing dust solidified B of the present invention and the dust used in the manufacturing process and apparatus thereof may suffice to be that containing as a principal component iron which occurs during the iron and steel manufacturing process or that occurring in a converter, a blast furnace or any other various type of steel manufacturing processes. Also, limited is not always to the dust contained in the exhaust gases, but any other dust may be used.

## Claims

1. A steel manufacturing dust solidified, which is a solid product formed by pressing and forming a dust containing, as a principal component, iron occurring during an iron and steel manufacturing process.

2. The steel manufacturing dust solidified as claimed in Claim 1, wherein the pressing and forming is caused by a mold.

3. The steel manufacturing dust solidified as claimed in Claim 1, which is a columnar body having a round cross-sectional shape.

4. The steel manufacturing dust solidified as claimed in Claim 2, which is 50 to 100 mm in diameter and 30 to 80 mm in height.

5. The steel manufacturing dust solidified as claimed in Claim 4, in which the ratio of the height relative to the diameter is within the range of 0.7 to 0.8.

6. A process of manufacturing a steel manufacturing dust solidified, in which a dust containing as a principal component iron occurring during an iron and steel manufacturing process is charged into and pressed within a mold to provide a solid product.

7. The process of manufacturing the steel manufacturing dust solidified as claimed in Claim 6, wherein the mold is in the form of a vertically oriented cylindrical chamber.

8. The process of manufacturing the steel manufacturing dust solidified as claimed in Claim 6, wherein a powder of carbon, aluminum or the like generated during the iron and steel manufacturing process is mixed in the dust as a binder and is then charged into the mold.

9. A manufacturing apparatus for a steel manufacturing dust solidified, which is operable to press and form a dust containing as a principal component iron occurring during an iron and steel manufacturing process to provide a solid product, which apparatus comprises a mold in the form of a cylindrical chamber, a lid member for closing one end of this mold, and a plunger capable of advancing from the opposite end into the mold to press the dust within the mold.

10. The manufacturing apparatus for the steel manufacturing dust solidified as claimed in Claim 9, wherein the mold is oriented vertically and the end, at which the lid member of this mold is provided, is on a lower side.
